# EUROPEAN PATENT SPECIFICATION

(11) **EP 1 280 654 B1**
(45) Date of publication and mention of the grant of the patent: **27.07.2005**
(21) Application number: 01930326.2
(22) Date of filing: 14.05.2001
(51) Int. Cl.: B29C 67/00, B05D 1/00

(54) **METHOD FOR APPLYING A LAYER CONTAINING AT LEAST POLYMERIC MATERIAL**
VERFAHREN ZUM AUFBRINGEN EINER POLYMERMATERIAL ENTHALTENDEN SCHICHT
PROCEDE D'APPLICATION D'UNE COUCHE CONTENANT AU MOINS UN MATERIAU POLYMERE

(30) Priority: 12.05.2000 NL 1015188
(43) Date of publication of application: 05.02.2003
(73) Proprietor: NEDERLANDSE ORGANISATIE VOOR TOEGEPAST-NATUURWETENSCHAPPELIJK ONDERZOEK TNO, 2628 VK Delft (NL)
(72) Inventor: SCHUURMAN, Gerlof, Arjan, NL-5622 GE Eindhoven (NL); KRUPERS, Maarten, Johannes, NL-5612 HJ Eindhoven (NL); MEUWISSEN, Michael, Hubertus, Helena, NL-6118 AA Nieuwstadt (NL); VERCAUTEREN, Franky, Flory, NL-5644 DK Eindhoven (NL)
(74) Representative: Prins, Adrianus Willem, Mr. Ir.
(86) International application number: PCT/NL2001/000363
(87) International publication number: WO 2001/091993

(56) References cited:
- WO-A-97/39903
- JACOBS P.F.: 'Rapid Prototyping & Manufacturing', 1992, SOCITIETY OF MANUFACTURING ENGINEERS, DEARBORN, MI 48121-0930 * page 398 - page 403 *

## Description

The present invention relates to a method for applying a layer containing at least polymer material to a substrate and to a method for manufacturing an object by successively applying such layers onto each other.

It is known to manufacture such objects in a stereolithography process (SL). In such a process, often use is made of UV radiation cation-curable epoxy resins or radical-curable acrylate resins. Curing then takes place through irradiation from a laser of a particular wavelength. By each time applying a next resin layer onto a preceding cured layer and selectively curing each next layer, an object can be obtained. When the object has been completed, a post-treatment follows, often with organic solvents such as tripropylene glycol, monomethyl ether or 2-propanol, and post-curing in an oven. In such a method, during curing and post-curing, shrinkage in the order of magnitude of 2 to 7% occurs. The resultant faults (inaccuracies in form and dimensions) can cumulate strongly, especially when during curing already next layers are being applied. Partly as a result of such shrinkage, the form and dimensions of an object to be manufactured have a limited resolution, in particular at best in the order of 25-50 µm. In addition, resolution-limiting factors that apply are the minimum layer thickness and the homogeneity thereof, and the manner of crosslinking of the UV-crosslinkable stereolithography resins. Further, drawbacks that apply are that acrylates during curing are sensitive to oxygen, while epoxy resins are hygroscopic. Moreover, the resins to be used are relatively expensive.

In addition, there are other so-called rapid prototyping techniques known for manufacturing objects layer by layer, such as, for instance "laminated object manufacturing (LOM)", "selective laser sintering (SLS)". From page 400 and figure 16-2 of a book by Paul F. Jacobs titled "Rapid Prototyping & Manufacturing" 1992, Society of Manufacturing Engineers, Dearborn MI 48121-0930 it is known to apply layers by depositing powder on a substrate and sintering the powder by heating the powder using a laser. These techniques also have all kinds of inherent disadvantages. The technique mentioned first works with a fixed layer thickness and is suitable especially for relatively large, massive objects. Hollow forms are difficult to realize. When the latter technique is used, it is often rather cumbersome to provide sharp forms in the object, which means a reduced resolution, while further the process proceeds in a less well-defined manner; in particular, a temperature control cannot be realized with sufficient accuracy.

The object of the invention is to avoid the disadvantages of the known techniques as far as possible and to provide an entirely new method for applying a layer, in particular a relatively thin layer, comprising at least polymer material, which method is suitable in particular for forming relatively small objects.

According to the invention, to that end, the method such as it is indicated in the preamble is characterized in that a respective layer is obtained by applying to the substrate a film of at least polymer material-containing particles dispersed in a non-reactive liquid and by subjecting these particles to an energy flow which is converted in situ at least substantially into heat, during which heat treatment the particles fuse with each other. The liquid does not serve as solvent here, but has the function of transport medium to enable the polymer material-containing particles to be applied uniformly to the substrate. During the heat treatment, in principle no chemical reaction takes place, but only a direct, or indirect, thermal process, whereby evaporation of the liquid or a direct fusion of the dispersed particles can occur.

The heat treatment, whereby the polymer material-containing particles fuse, can be done with the aid of an AFM ("Atomic Force Microscope") "thermal analyzer" after the liquid in the film has evaporated therefrom. Depending on the volatility of the liquid and the desired process rate, a forced evaporation can take place with the aid of drying air.

The heat treatment can also be properly realized with the aid of a laser device. In a first application, the energy generated by the laser device can be employed to bond together the polymer material-containing particles in a thermal manner (fusion). In a general sense, it holds that when the energy treatment takes place utilizing a dispersion already dried without local heat treatment, this is designated as DLHT (dry layer heat treatment). When a dispersion is involved which is dried forcibly during the heat treatment process, that is, the liquid is evaporated directly under the influence of the energy employed, this is called WLHT (wet layer heat treatment).

The result of the two methods depends on many factors, such as the layer thickness applied, the solids content in the layer applied, the composition of the transport medium, the particle size, the desired process rate, etc.

In a preferred embodiment, for ease of handling, the film is formed by polymer material-containing particles dispersed in water. The size of the dispersed particles is between about 5 and 30,000 nm, and preferably between 100 and 1000 nm. In case of an emulsion polymerization, the particles will typically be in the order of 30-1000 nm; in case of a suspension polymerization, they will typically be greater than about 1000 nm. Above 30,000 nm, instead of the method according to the invention, selective laser sintering (SLS) is used.

According to the invention, both polymer particles of one single composition (homopolymer particles or copolymer particles) and of a different composition can be present. In the latter case, it is also possible that the individual polymer particles are composed of different polymers. Thus, the polymer particles can be built up from a core and a shell of different composition, for instance a core of an electrically conducting polymer and a shell of an electrically insulating polymer, or a core and a shell of different elastic properties. In that case, depending on the heat treatment, either the shells alone, or both the shells and the cores can fuse with each other. When also the cores fuse with each other, they can form particular patterns. Through selective heat treatment, it is possible in this way, for instance, to incorporate electrical conductors into an otherwise electrically insulating plastic. In addition to a makeup of polymer particles from a core and a shell of polymer material of different properties, it is also possible to take particles whose core consists of a non-polymer (for instance an organic (non-polymer), inorganic or metallic) phase which is enveloped with a polymeric phase. In addition to the core-shell particle structure, other types of hybrid materials (composites) are useful, for instance particles having a raspberry, acorn or onion structure. Naturally, all kinds of combinations of the above-mentioned polymer material-containing particles are possible. Accordingly, the particles can differ both in composition and in size.

The film to be provided on the substrate can contain, in addition to the transport medium and the polymers dispersed therein, one or more further non-reactive components, such as, for instance, colors, pigments, flow property improving or evaporation influencing substances. It is also possible that the film contains one or more reactive components, such as, for instance, crosslinking agents to be activated in a post-treatment. Further, under circumstances to be mentioned hereinafter, a heat transferring agent, such as carbon black, may be dispersed in the film. It is also possible that ceramic particles have been added to the film, which ceramic particles are bonded to each other through the heat treatment and the fusion of the polymer material-containing particles, and, for instance, a composite pattern can be formed from which the polymeric material can be subsequently removed by firing.

To prevent coagulation in the film, the solids content in the film will be less than 70 vol.% and preferably less than 60 vol.%. A minimum solids content is not defined, since a minimum layer thickness should always be achieved.

For carrying out the heat treatment, a laser device operative in the UV region can be used. The wavelength at which the laser device is operative is then in particular between 190 and 400 nm, and is preferably between 240 and 310 nm. Below 400 nm, the polymers useful for the method described here can directly absorb the energy supplied by the laser. Moreover, such a laser device enables more accurate work: a good focusing on a relevant point on the film is rendered possible. The wavelength is selected to be greater than 190 nm, because below that value it is no longer possible to work properly in air atmosphere; a vacuum or a gas atmosphere not reactive to the laser radiation is then highly desirable. Further, the polymers can be damaged to a considerable extent by the high photon energy. Further, above 190 nm, it is still possible to work with standard optics. Thus, working with, for instance, an F2 157nm excimer laser device is more difficult and more expensive. In view of the above, it is therefore preferred to work with a laser in the UV region. Thus; for instance, an Argon-ion, Nd:YAG (3rd, 4th or 5th harmonic) or excimer laser device can be used.

In addition, it is also possible to use a laser device in the visible or infrared region, for instance an Nd:YAG laser device operative in the infrared region, in particular at a wavelength of about 1064 nm. Because in that case the heat supplied by the laser cannot be absorbed by the polymers useful for the method described here, it will then be necessary to add to the film a heat transferring agent, such as carbon black, as already mentioned above. For a laser device that is operative in the far infrared, such as a CO₂ laser device, however, an addition of carbon black is not necessary, because there the laser energy can be absorbed directly by the polymers. Further, other energy sources, such as, for instance, a UV lamp, can be used for drying the dispersion.

The laser device can transmit both a pulsed activation signal and a continuous activation signal. For the practice of the method, use can then be made of a scanning technique, a masking technique or another imaging technique. It is also possible, for instance, to split a laser beam into two parts equal in geometry and energy content. By focusing these two parts in the same way and having them meet at a point of the substrate, very locally a fusion can be effected.

When by the laser a laser beam is emitted with a normally used Gaussian intensity distribution over the beam width, the edges of the spot of the film layer to be activated will often be slightly thicker than the central portion of the spot. To prevent this, the intensity of the beam energy over the cross section will be adapted to the operation. This can be realized internally in the laser device or with the aid of other means, such as an external optical system.

The method as described so far is directed to the application of a single layer, that is, the application of a coating. However, the invention also relates to a method for manufacturing an object, specifically by building it up layer by layer, each of the layers to be successively applied onto each other being obtained by the practice of the above-described method.

The invention relates not only to a method but also to an apparatus for applying a layer containing at least polymer material to a substrate, or for manufacturing an object by building it up layer by layer. To that end, the apparatus is provided with a laser device with optical components and with a processing space with a substrate on which a polymer layer, or several polymer layers to be successively applied onto each other, can be formed by the practice of the method described hereinabove. This laser device can further be provided with means for setting the intensity profile over the beam cross section. Also, a mask may be arranged in the optical path, in particular in combination with image reduction, or directly above the substrate (for a one-on-one image). An automatic setting of the transmissivity of the mask is then possible; compared with the scanning with the laser beam, the laminated build-up of an object with the aid of grating, special lenses or other aids, such as all kinds of optical systems, then proceeds faster as a result. Another possibility of selectively scanning larger surfaces is to make use of selective illumination.

The invention further relates to a coating, that is, a layer containing at least polymer material, and to an object formed by such layers, obtained by the use of the method described above.

The invention will now be further elucidated with reference to the accompanying drawing. In the drawing:
Fig. 1 shows a schematically represented set-up of an apparatus according to the invention;
Fig. 2 shows the principle of a DLHT method according to the invention;
Figs. 3A-C show the principle of a WLHT method according to the invention;
Figs. 4A,B show a Gaussian distribution intensity profile over the laser beam cross section and a layer obtained with the aid thereof; and
Figs. 5A,B show a modified "tophat" intensity distribution over a laser beam cross section and a more homogeneous layer obtained with the aid thereof.

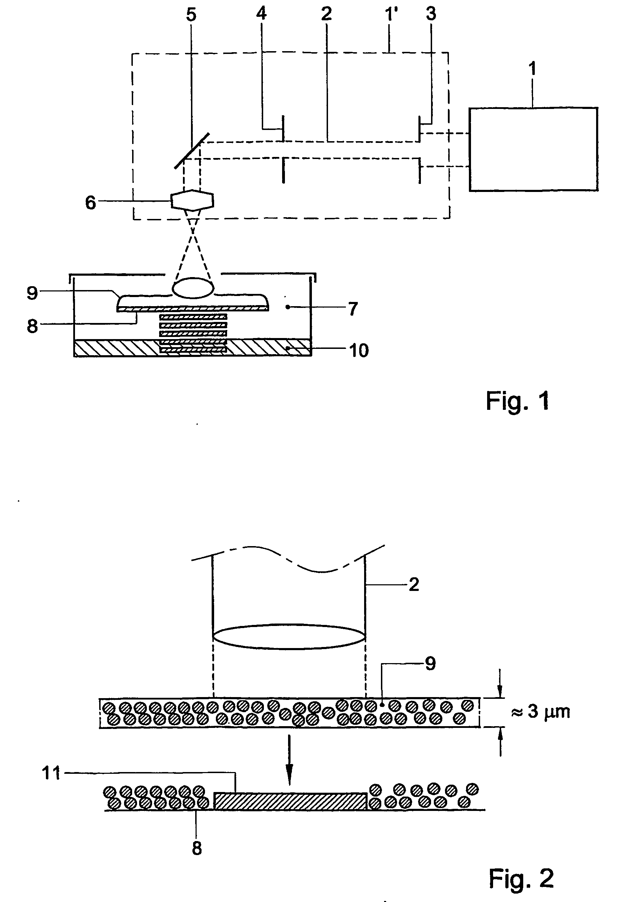

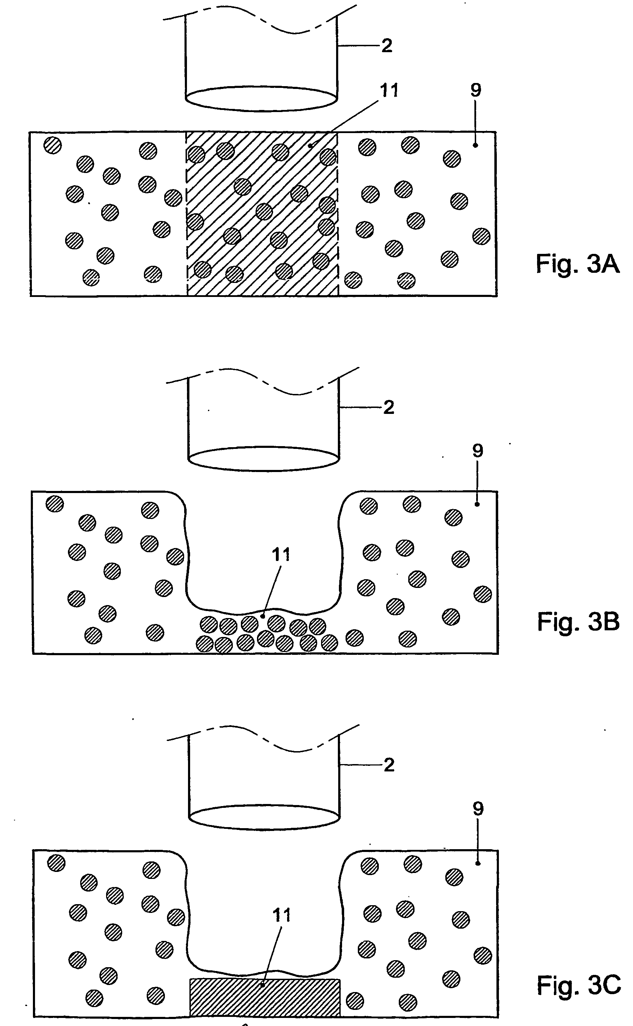

The set-up of an apparatus according to the invention as schematically represented in Fig. 1 comprises an excimer laser device 1, by means of which a laser beam 2 is obtained, which, via an optical system 1' with various optical components, such as, for instance, a first and a second diaphragm 3 and 4, respectively, a mirror 5 and a lens 6, is directed into a space 7. In the space 7, a substrate 8 is present to which a layer, or several layers to be applied onto each other, can be applied according to the method of the invention. On the substrate 8, with the aid of a doctor blade, a film 9 can be applied. When using the method according to the invention, this film, in the examples described with reference to Figs. 2 and 3A-C, consists of water having polymer particles dispersed therein. When, as is indicated in Figs. 3A-C, a WLHT method is pursued, the space 7 is filled with air of a high relative humidity. Present on the bottom in the space 7, when applying the film 9, is an amount 10 of a solvent for the saturated vapor in the space 7.

In a DLHT method, as is indicated in Fig. 2, a film 9 about 10 µm thick was applied to the substrate 8 with the aid of a doctor blade. The solids content of the film was 16%. The space 7 was filled with dry air. After the water had evaporated virtually completely from the film 9, a layer of about 2 µm was left. This layer was subjected to a heat treatment with the aid of an excimer laser. The temperature in the film at the site of the spot exceeded the MFFT ("minimum film forming temperature"), in this case 35 to 40 °C, except in the transition area formed as a result of heat diffusion, while the temperature outside the spot remained below this MFFT. At the spot 11 irradiated by the laser beam, the polymer particles were fused with each other, and after about 1000 60ns laser pulses a transparent layer of about 2 µm was formed. The pulse frequency was found to be of little influence on the fusion process. The pulse intensity was such that the above-mentioned MFFT-defined temperatures inside and outside the spot were maintained. The unfused polymer particles around the spot 11 were subsequently rinsed away.

In a WLHT method, as is indicated in Fig. 3, a same film of about 10 µm was applied to the substrate 8. Now, however, the film was subjected directly to a heat treatment with the aid of the excimer laser, whereby first the water at the spot 11 evaporates, while the polymer particles descended, whereafter the polymer particles fused with each other again and a transparent layer of about 2 µm was formed.

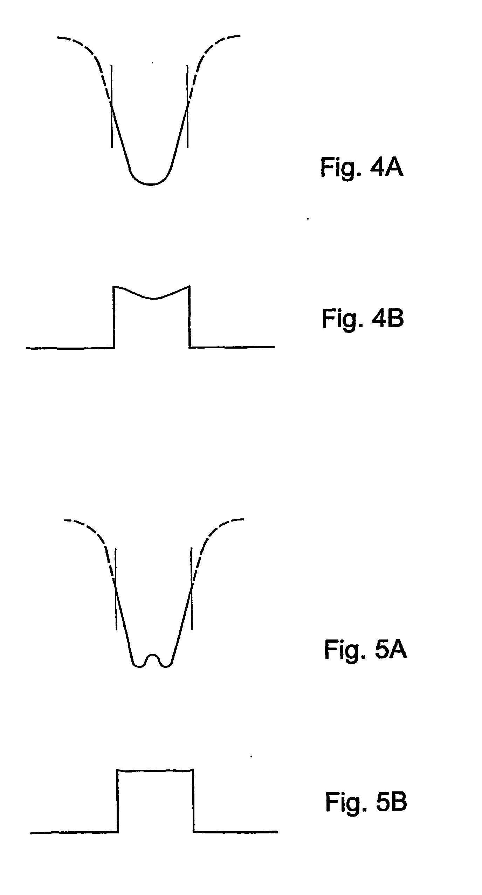

In practice, the intensity profile over the cross section of the laser beam often has a Gaussian configuration; this is indicated in Fig. 4A. The effect is that a layer is formed (see Fig. 4B) which is somewhat higher at the edges than in the middle. To compensate this effect, a beam with a modified "tophat" distribution can be used, as indicated in Fig. 5A, so that a flat layer (see Fig. 5B) can be obtained.

In the following, various facets of the invention will be elucidated in and by more concrete examples.

### 1. Excimer laser

Use was made of a Lambda Physik EMG 1003i Excimer laser having a pulse energy of 200 mJ at a maximum, working at 248 nm (KrF gas mixture) with a pulse width of 60ns. The pulse frequency used is 50 Hz. Imaging optics with a focal distance of 50 mm and an image distance of 75 mm were used, while the first pinhole for selecting a qualitatively good part of the laser beam (diameter: 1.5 mm) is at 5 cm from the laser, while the second pinhole (diameter: 1.5 mm) is at 100 cm behind the first pinhole ("filtering" of the most divergent parts), then a diaphragm and a 45°mirror to deflect the light from horizontal to vertical. The substrate is on an Oriel XYZ-positioning table (see further Fig. 1).

### 2. Description of emulsion polymerization (JZ002)

A 2 L double-walled, glass reactor equipped with a magnetic stirrer, a cooler and a thermocouple, was filled with 400 g butylmethacrylate, 0.4 g tetrabromomethane and 1470 g demineralized water. The mixture was stirred for 45 min. (450 rpm) at room temperature, while nitrogen was passed through the mixture. Next, the reactor was heated to 70 °C, whereafter a degassed, aqueous ammonium persulfate solution (13.32 g in 41.4 g demineralized water) was added. The stirring speed was lowered to 300 rpm immediately after addition of the initiator solution. About 20 min. after addition of the initiator, the stirring speed was further reduced to about 270 rpm. After about 1 hour, the stirring speed was lowered once again, to 195 rpm. 2.5 hours after starting the polymerization, the heating was switched off and the dispersion slowly cooled to room temperature. Thereupon the cooled dispersion was dialyzed in Visking dialysis tubes (31.70 mm diameter) in a bucket with flowing demineralized water. The solids content of the dispersion was 18.4 %. The size of the dispersed polymer particles was determined with DCP (disk centrifuge photosedimentometry). The number-average particle size, Dn, was 826 nm. The weight-average particle size, Dw, was 827 nm. The polydispersity of the system, expressed as Dw/Dn, was 1.002.

### 3. Description of emulsion polymerization (JZ057)

A substantially equal procedure was followed as described with JZ002. With JZ057, 300 g butylmethacrylate, 0.3 g dodecyl thiol (instead of tetrabromomethane), 1.95 g sodium bicarbonate and 1.03 g sodium dodecyl sulfate and 1157 g demineralized water were used. The reaction was started by addition of an ammonium persulfate solution (15.37 g in 70.29 g demineralized water). The total polymerization time was 150 min. The solids content of the dispersion was 16.1 %. The size of the dispersed polymer particles was determined with DCP (disk centrifuge photosedimentometry). The number-average particle size, Dn, was 162 nm. The weight-average particle size, Dw, was 164 nm. The polydispersity of the system, expressed as Dw/Dn, was 1.008. A part of the dispersion was evaporated under vacuum with the aid of a rotation evaporator. The solids percentage of the concentrated dispersion was 40.7%.

### 4. Applying dispersion layer

With a pipette a few drops were applied onto a microscope glass (76 x 26 mm) and then spread out in the longitudinal direction of the glass plate with a 12 µm wire doctor blade.

5. A thicker layer was applied by a kind of flow coating process. A glass plate was held at an angle of about 40° and on top of the glass plate dispersion was squirted with a pipette.

### 6. WLHT

According to the "Wet Layer Heat Treatment" method, an applied dispersion layer (JZ002) was laid onto the sample substrate (see Example 1: "description set-up"). The applied dispersion layer was treated with a laser with the following characteristics: 50 Hz, 60 ns pulse width, 50 mm focal distance from the imaging lens, 75 mm image distance, first pinhole (diameter: 1.5 mm) at 5 cm from the laser, second pinhole (diameter: 1.5 mm) at 100 cm behind the first pinhole, then a diaphragm and a 45° mirror to deflect the light from horizontal to vertical. 50, 100, 250 and 2000 laser pulses were directed to different locations on the dispersion layer. During the laser treatments, a crater formed in the wet dispersion layer which was not flooded after the treatment with surrounding liquid. Thereafter the wet layer was dried in the air. The locations treated could be well distinguished from the locations dried in the air. The treated locations were completely transparent, while the surrounding layer was white.

### 7. First variation on Example 6

Repetition of the example described under 6 "WLHT" with a focal distance of 50 mm gave spot formation only at 2000 laser pulses. At fewer laser pulses, the surrounding liquid flowed over the treated spots again. These locations were then not visible anymore after treatment.

### 8. Second variation on Example 6

Repetition of the example described under 6 "WLHT", wherein with a frequency of 50 Hz 2000 laser pulses were applied to a dispersion layer on a substrate moving at a speed of 0.1 mm/s for 50 s. After treatment, the dispersion was dried in the air; the result of this experiment was a transparent line in a white, dried dispersion.

### 9. Third variation on Example 6

Repetition of the example described under 6 "WLHT", using dispersion JZ057 (16%). 50, 100, 200, 500 and 1000 laser pulses were steered onto the wet dispersion layer. The dispersion was dried in the air. The locations with 50 and 100 pulses were not visible after laser treatment. At the other locations, transparent spots could be clearly observed.

### 10. Variation on Example 9

Repetition of the example described under 9 "WLHT", using dispersion JZ057 (41%).

### 11. DLHT

According to the "Dry Layer Heat Treatment" method, a dispersion (JZ002) was provided on a microscope glass and subsequently dried in the air. The dried film was white, which indicates that no film formation has taken place yet. The microscope glass with the dried dispersion layer was laid on the sample substrate (see Example 1: "description set-up") and treated with a laser with the following characteristics: 50 Hz, 60 ns pulse width, 50 mm imaging lens, 75 mm focal distance, first pinhole (diameter: 1.5 mm) at 5 cm from the laser, second pinhole (diameter: 1.5 mm) at 100 cm behind the first pinhole, then a diaphragm and a 45°mirror to deflect the light from horizontal to vertical. 50, 100, 250 and 2000 laser pulses were controlled onto different locations on the dispersion layer. The treated spots could be well distinguished with the aid of a microscope. The treated locations were completely transparent, while the surrounding layer was white.

## Claims

1. A method for applying a layer containing at least polymer material to a substrate (8), **characterized in that** such a layer is obtained by applying to the substrate (8) a film (9) of at least polymer material-containing particles dispersed in a non-reactive liquid and by subjecting these particles to an energy flow (2) which is locally at least substantially converted into heat, during which heat treatment the particles fuse with each other.

2. A method according to claim 1, **characterized in that** the heat treatment is done with the aid of an AFM ("Atomic Force Microscope") "thermal analyzer" after the liquid in the film (9) has been evaporated therefrom.

3. A method according to claim 1, **characterized in that** the heat treatment is done with the aid of a laser device (1).

4. A method according to claim 3, **characterized in that** the heat generated by the laser device (1) is utilized first to remove the liquid from the film (9) and then to fuse the polymer material-containing particles with each other.

5. A method according to claim 3, **characterized in that** only after the liquid has at least substantially disappeared from the film (9), the polymer material-containing particles fuse with each other with the aid of the laser device (1).

6. A method according to any one of the preceding claims, **characterized in that** the film (9) is formed by polymer material-containing particles dispersed in water.

7. A method according to any one of the preceding claims, **characterized in that** the size of the dispersed particles is between about 5 and 30,000 nm, and preferably between 100 and 1000 nm.

8. A method according to any one of the preceding claims, **characterized in that** polymer material-containing particles of different composition and/or size are present.

9. A method according to any one of the preceding claims, **characterized in that** polymer material-containing particles have a multicomponent structure, such as a core-shell, raspberry, acorn or onion structure.

10. A method according to any one of the preceding claims, **characterized in that** the film (9) contains one or more further non-reactive components, such as, for instance, colors, pigments, or flowing property improving agents.

11. A method according to any one of the preceding claims, **characterized in that** the film (9) contains one or more reactive components, such as, for instance, crosslinking agents to be activated in a post-treatment.

12. A method according to any one of the preceding claims, **characterized in that** in the film (9) a heat transferring agent, such as carbon black, is dispersed.

13. A method according to any one of the preceding claims, **characterized in that** the solids content in the wet film (9) is less than 70 vol.% and preferably less than 60 vol.%.

14. A method according to claim 3 and any one of the preceding claims, as far as dependent from claim 3, **characterized in that** a laser device (1) operative in the UV region is used.

15. A method according to claim 14, **characterized in that** the wavelength at which the laser device (1) is operative is between 190 and 360 nm, and is preferably about 248 nm.

16. A method according to claim 14 or 15, **characterized in that** an excimer laser device (1) is used.

17. A method according to claim 14 or 15, **characterized in that** an Nd:YAG laser device (1) is used.

18. A method according to claim 14 or 15, **characterized in that** a solid state diode pumped laser is used.

19. A method according to claim 3 and any one of claims 4-13, as far as dependent from claim 3, **characterized in that** an Nd:YAG laser device (1) is used which is operative in the infrared region, in particular at a wavelength of about 1064 nm, while carbon black has been added to the film (9) as heat transferring agent.

20. A method according to any one of claims 14-19, **characterized in that** the laser device (1) transmits a pulsed activation signal.

21. A method according to any one of claims 14-19, **characterized in that** the laser device (1) transmits a continuous activation signal.

22. A method according to claim 21, **characterized in that** the laser device (1) performs a scanning movement over the film (9).

23. A method according to any one of claims 14-22, **characterized in that** the laser device (1), viewed over the width of the beam, has a "tophat" distribution intensity profile.

24. A method for manufacturing an object by building it up layer-by-layer, wherein each of the layers to be successively applied onto each other is obtained by the use of the method according to any one of the preceding claims.

25. An apparatus comprising a laser device (1) and with a processing space having a substrate (8) on which a layer containing at least a polymer material can be formed, **characterized in that** the apparatus comprises means for providing a film (9) of at least polymer material-containing particles dispersed in a non-reactive liquid to a substrate (8), or for providing films (9) of at least polymer material-containing particles dispersed in a non-reactive liquid to a substrate (8) layer-by-layer, by the use of the method according to any one of the preceding claims.

26. An apparatus according to claim 25, **characterized in that** the laser device (1) is provided with means for setting the intensity profile over the beam cross section.

27. An apparatus according to claim 25 or 26, **characterized in that** a mask is arranged in the optical path or directly above the substrate (8).

28. A coating obtained by the use of the method according to any one of claims 1-23.

29. An object obtained by the use of the method according to claim 24.

## Patentansprüche

1. Verfahren zur Aufbringung einer Schicht, die mindestens Polymermaterial enthält, auf ein Substrat (8), **dadurch gekennzeichnet, dass** eine solche Schicht erhalten wird, indem ein Film (9) aus mindestens Polymermaterial enthaltenden Teilchen, die in einer nicht-reaktiven Flüssigkeit dispergiert sind, auf das Substrat (8) aufgebracht wird und diese Teilchen einem Energiefluss (2) ausgesetzt werden, der lokal zumindest im Wesentlichen in Wärme umgewandelt wird, wobei die Teilchen während der Wärmebehandlung miteinander verschmelzen.

2. Verfahren nach Anspruch 1, **dadurch gekennzeichnet, dass** die Wärmebehandlung mit Hilfe eines AFM ("Atomkraftmikroskop") "Thermalanalysators" durchgeführt wird, nachdem die Flüssigkeit in der Film (9) daraus verdampft worden ist.

3. Verfahren nach Anspruch 1, **dadurch gekennzeichnet, dass** die Wärmebehandlung mit Hilfe einer Laservorrichtung (1) durchgeführt wird.

4. Verfahren nach Anspruch 3, **dadurch gekennzeichnet, dass** die durch die Laservorrichtung (1) erzeugte Wärme verwendet wird, um zuerst die Flüssigkeit aus dem Film (9) zu entfernen und dann die Polymermaterial enthaltenden Teilchen miteinander zu verschmelzen.

5. Verfahren nach Anspruch 3, **dadurch gekennzeichnet, dass** die Polymermaterial enthaltenden Teilchen nur miteinander mit Hilfe der Laservorrichtung (1) verschmelzen, nachdem die Flüssigkeit im Wesentlichen aus dem Film (9) verschwunden ist.

6. Verfahren nach einem der vorhergehenden Ansprüche, **dadurch gekennzeichnet, dass** der Film (9) durch Polymermaterial enthaltende Teilchen gebildet wird, die in Wasser dispergiert sind.

7. Verfahren nach einem der vorhergehenden Ansprüche, **dadurch gekennzeichnet, dass** die Größe der dispergierten Teilchen zwischen etwa 5 und 30 000 nm und vorzugsweise zwischen 100 und 1000 nm liegt.

8. Verfahren nach einem der vorhergehenden Ansprüche, **dadurch gekennzeichnet, dass** Polymermaterial enthaltenden Teilchen verschiedener Zusammensetzung und/oder Größe vorhanden sind.

9. Verfahren nach einem der vorhergehenden Ansprüche, **dadurch gekennzeichnet, dass** die Polymermaterial enthaltenden Teilchen eine Mehrkomponentenstruktur wie beispielsweise eine Kern-Schale-, Himbeer-, Eichel- oder Zwiebelstruktur aufweisen.

10. Verfahren nach einem der vorhergehenden Ansprüche, **dadurch gekennzeichnet, dass** der Film (9) eine oder mehrere weitere nicht-reaktive Komponenten enthält, wie beispielsweise Farben, Pigmente oder die Fließeigenschaften verbessernde Mittel.

11. Verfahren nach einem der vorhergehenden Ansprüche, **dadurch gekennzeichnet, dass** der Film (9) eine oder mehrere reaktive Komponenten enthält wie beispielsweise Vernetzungsmittel, die in einer Nachbehandlung zu aktivieren sind.

12. Verfahren nach einem der vorhergehenden Ansprüche, **dadurch gekennzeichnet, dass** in dem Film (9) ein Wärmeübertragungsmittel wie beispielsweise Ruß dispergiert ist.

13. Verfahren nach einem der vorhergehenden Ansprüche, **dadurch gekennzeichnet, dass** der Feststoffgehalt in dem nassen Film (9) kleiner als 70 Vol.% und vorzugsweise kleiner als 60 Vol.% ist.

14. Verfahren nach Anspruch 3 und einem der vorhergehenden Ansprüche, soweit sie von Anspruch 3 abhängen, **dadurch gekennzeichnet, dass** eine Laservorrichtung (1) verwendet wird, die im UV-Bereich betreibbar ist.

15. Verfahren nach Anspruch 14, **dadurch gekennzeichnet, dass** die Wellenlänge, bei der die Laservorrichtung (1) betreibbar ist, zwischen 190 und 360 nm liegt und vorzugsweise etwa 248 nm beträgt.

16. Verfahren nach Anspruch 14 oder 15, **dadurch gekennzeichnet, dass** eine Excimerlaservorrichtung (1) verwendet wird.

17. Verfahren nach Anspruch 14 oder 15, **dadurch gekennzeichnet, dass** eine Nd:YAG-Laservorrichtung (1) verwendet wird.

18. Verfahren nach Anspruch 14 oder 15, **dadurch gekennzeichnet, dass** ein Festkörperdioden-gepumpter-Laser verwendet wird.

19. Verfahren nach Anspruch 3 und einem der Ansprüche 4 bis 13, soweit abhängig von Anspruch 3, **dadurch gekennzeichnet, dass** eine Nd:YAG-Laservorrichtung (1) verwendet wird, die im Infrarotbereich betreibbar ist, insbesondere bei einer Wellenlänge von etwa 1064 nm, wobei dem Film (9) Ruß als Wärmeübertragungsmittel zugesetzt worden ist.

20. Verfahren nach einem der Ansprüche 14 bis 19, **dadurch gekennzeichnet, dass** die Laservorrichtung (1) ein gepulstes Aktivierungssignal überträgt.

21. Verfahren nach einem der Ansprüche 14 bis 19, **dadurch gekennzeichnet, dass** die Laservorrichtung (1) ein kontinuierliches Aktivierungssignal überträgt.

22. Verfahren nach Anspruch 21, **dadurch gekennzeichnet, dass** die Laservorrichtung (1) eine Abtastbewegung über den Film (9) durchführt.

23. Verfahren nach einem der Ansprüche 14 bis 22, **dadurch gekennzeichnet, dass** die Laservorrichtung (1), betrachtet über die Breite des Strahls, ein "Zylinderhut"-Verteilungsintensitätsprofil aufweist.

24. Verfahren zur Herstellung eines Gegenstandes, bei dem er Schicht für Schicht aufgebaut wird, wobei jede der nacheinander aufzutragenden Schichten durch Verwendung des Verfahrens gemäß einem der vorhergehenden Ansprüche erhalten wird.

25. Vorrichtung, die eine Laservorrichtung (1) und einen Verarbeitungsraum mit einem Substrat (8) umfasst, auf dem eine Schicht gebildet werden kann, die mindestens Polymermaterial enthält, **dadurch gekennzeichnet, dass** die Vorrichtung Mittel zur Bereitstellung eines Films (9) aus mindestens Polymermaterial enthaltenden Teilchen, die in einer nicht-reaktiven Flüssigkeit dispergiert sind, auf einem Substrat (8) oder zur Bildung von Filmen (9) aus mindestens Polymermaterial enthaltenden Teilchen, die in einer nicht-reaktiven Flüssigkeit dispergiert sind, auf einem Substrat (8) Schicht für Schicht durch Anwendung des Verfahrens gemäß einem der vorhergehenden Ansprüche umfasst.

26. Vorrichtung nach Anspruch 25, **dadurch gekennzeichnet, dass** die Laservorrichtung (1) mit Mitteln zur Einstellung des Intensitätsprofils über den Strahlquerschnitt ausgestattet ist.

27. Vorrichtung nach Anspruch 25 oder 26, **dadurch gekennzeichnet, dass** in dem optischen Weg oder direkt oberhalb des Substrats (8) eine Maske angeordnet ist.

28. Beschichtung, die durch Verwendung des Verfahrens gemäß einem der Ansprüche 1 bis 23 erhalten worden ist.

29. Gegenstand, der durch die Verwendung des Verfahrens gemäß Anspruch 24 erhalten worden ist.

## Revendications

1. Procédé pour appliquer une couche contenant au moins un matériau polymère à un substrat (8), **caractérisé en ce que** cette couche est obtenue en appliquant au substrat (8) un film (9) constitué de particules contenant au moins un matériau polymère dispersées dans un liquide non-réactif et en soumettant ces particules à un flux d'énergie (2) qui est localement au moins essentiellement converti en chaleur, au cours duquel traitement thermique, les particules fusionnent les unes avec les autres.

2. Procédé selon la revendication, **caractérisé en ce que** le traitement thermique est effectué à l'aide d'un "analyseur thermique" AFM ("Microscope à Force Atomique") après que le liquide dans le film (9) se soit évaporé de celui-ci.

3. Procédé selon la revendication 1, **caractérisé en ce que** le traitement thermique est effectué à l'aide d'un dispositif laser (1).

4. Procédé selon la revendication 3, **caractérisé en ce que** la chaleur générée par le dispositif laser (1) est utilisée tout d'abord pour retirer le liquide du film (9) et ensuite pour fusionner les particules contenant un matériau polymère les unes avec les autres.

5. Procédé selon la revendication 3, **caractérisé en ce que**, seulement après que le liquide ait au moins essentiellement disparu du film (9), les particules contenant un matériau polymère fusionnent les unes aux autres à l'aide du dispositif laser (1).

6. Procédé selon l'une quelconque des revendications précédentes, **caractérisé en ce que** le film (9) est formé de particules contenant un matériau polymère dispersées dans de l'eau.

7. Procédé selon l'une quelconque des revendications précédentes, **caractérisé en ce que** la taille des particules dispersées est comprise entre environ 5 et 30 000 nm, et de préférence entre 100 et 1 000 nm.

8. Procédé selon l'une quelconque des revendications précédentes, **caractérisé en ce que** des particules contenant un matériau polymère de composition et/ou taille différentes sont présentes.

9. Procédé selon l'une quelconque des revendications précédentes, **caractérisé en ce que** les particules contenant un matériau polymère ont une structure à multiples composants, telle qu'une structure noyau-enveloppe, de framboise, de gland ou d'oignon.

10. Procédé selon l'une quelconque des revendications précédentes, **caractérisé en ce que** le film (9) contient un ou plusieurs composants non-réactifs supplémentaires, tels que, par exemple, des agents colorants, des pigments, ou des agents améliorant la propriété d'écoulement.

11. Procédé selon l'une quelconque des revendications précédentes, **caractérisé en ce que** le film (9) contient un ou plusieurs composants réactifs, tels que, par exemple, des agents de réticulation à activer au cours d'un post-traitement.

12. Procédé selon l'une quelconque des revendications précédentes, **caractérisé en ce que**, dans le film (9), un agent de transfert de chaleur, tel que du noir de carbone, est dispersé.

13. Procédé selon l'une quelconque des revendications précédentes, **caractérisé en ce que** la teneur en matières solides dans le film humide (9) est inférieure à 70 % en volume et de préférence inférieure à 60 % en volume.

14. Procédé selon la revendication 3 et l'une quelconque des revendications précédentes, pour autant qu'elle dépende de la revendication 3, **caractérisé en ce qu'**un dispositif laser (1) opérationnel dans la région UV est utilisé.

15. Procédé selon la revendication 14, **caractérisé en ce que** la longueur d'onde à laquelle le dispositif laser (1) est opérationnel est comprise entre 190 et 360 nm, et est de préférence d'environ 248 nm.

16. Procédé selon la revendication 14 ou 15, **caractérisé en ce qu'**un dispositif laser à excimer (1) est utilisé.

17. Procédé selon la revendication 14 ou 15, **caractérisé en ce qu'**un dispositif laser à Nd:YAG (1) est utilisé.

18. Procédé selon la revendication 14 ou 15, **caractérisé en ce qu'**un laser pompé par diode à solide est utilisé.

19. Procédé selon la revendication 3 et l'une quelconque des revendications 4 à 13, pour autant qu'elle dépende de la revendication 3, **caractérisé en ce qu'**un dispositif laser à Nd:YAG (1) est utilisé qui est opérationnel dans la région infrarouge, en particulier à une longueur d'onde d'environ 1 064 nm, alors que du noir de carbone a été ajouté au film (9) en tant qu'agent de transfert de chaleur.

20. Procédé selon l'une quelconque des revendications 14 à 19, **caractérisé en ce que** le dispositif laser (1) transmet un signal d'activation pulsé.

21. Procédé selon l'une quelconque des revendications 14 à 19, **caractérisé en ce que** le dispositif laser (1) transmet un signal d'activation continu.

22. Procédé selon la revendication 21, **caractérisé en ce que** le dispositif laser (1) effectue un mouvement de balayage sur le film (9).

23. Procédé selon l'une quelconque des revendications 14 à 22, **caractérisé en ce que** le dispositif laser (1), observé sur la largeur du faisceau, a un profil d'intensité de distribution de type "haut-de-forme".

24. Procédé pour fabriquer un objet en le constituant couche par couche, chacune des couches à appliquer successivement les unes sur les autres étant obtenue en utilisant le procédé selon l'une quelconque des revendications précédentes.

25. Appareil comportant un dispositif laser (1) et ayant un espace de traitement possédant un substrat (8) sur lequel une couche contenant au moins un matériau polymère peut être formée, **caractérisé en ce que** l'appareil comporte des moyens pour agencer un film (9) constitué de particules contenant au moins un matériau polymère dispersées dans un liquide non-réactif sur un substrat (8), et agencer des films (9) constitués des particules contenant au moins un matériau polymère dispersées dans un liquide non-réactif sur un substrat (8) couche par couche, en utilisant le procédé selon l'une quelconque des revendications précédentes.

26. Appareil selon la revendication 25, **caractérisé en ce que** le dispositif laser (1) est muni de moyens pour établir le profil d'intensité sur la coupe transversale du faisceau.

27. Appareil selon la revendication 25 ou 26, **caractérisé en ce qu'**un masque est agencé dans le trajet optique ou directement au-dessus du substrat (8).

28. Revêtement obtenu en utilisant le procédé selon l'une quelconque des revendications 1 à 23.

29. Objet obtenu en utilisant le procédé selon la revendication 24.
